**Europäisches Patentamt**

**European Patent Office**

**Office européen des brevets**

(19)

(11) Veröffentlichungsnummer: **0 284 723
B1**

# (12) EUROPÄISCHE PATENTSCHRIFT

(45) Veröffentlichungstag der Patentschrift:
**12.09.90**

(51) Int. Cl.⁵: **B60R 25/02**

(21) Anmeldenummer: **88101309.8**

(22) Anmeldetag: **29.01.88**

(54) **Automobil-Lenkschloss.**

(30) Priorität: **17.02.87 FR 8701991**

(43) Veröffentlichungstag der Anmeldung:
**05.10.88 Patentblatt 88/40**

(45) Bekanntmachung des Hinweises auf die Patenterteilung:
**12.09.90 Patentblatt 90/37**

(84) Benannte Vertragsstaaten:
**DE ES FR GB IT**

(56) Entgegenhaltungen:
**EP-A- 0 210 962
DE-A- 1 956 163
DE-B- 1 099 873
FR-A- 1 114 810**

(73) Patentinhaber: **VALEO NEIMAN, 12bis, rue Maurice Berteaux, F-78290 CROISSY-SUR-SEINE(FR)**

(72) Erfinder: **Pascal, Claude, Les Caillettes Cuffy, F-18150 La Guerche Sur l'Aubois(FR)**

(74) Vertreter: **Cohausz & Florack Patentanwälte, Postfach 14 01 20 Schumannstrasse 97, D-4000 Düsseldorf 1(DE)**

ACTORUM AG

# Beschreibung

Die Erfindung betrifft eine Lenkschloß-Diebstahlsicherung mit einem Riegel, der sich in einer Riegelführung bewegt und mit einem Riegelzugelement verbunden ist.

Bei Einwirkung von Erschütterungen ermöglicht das Spiel, welches für die Gleitbewegung des Riegels in seiner Führung erforderlich ist, ein Aneinanderstoßen dieser beiden Teile, wodurch im Fahrgastraum des Fahrzeuges ein als unzulässig angesehenes Geräusch entsteht.

Die vorliegende Erfindung hat den Zweck, dieser Schwierigkeit abzuhelfen.

Zu diesem Zweck ist die Diebstahlsicherung gemäß der Erfindung dadurch gekennzeichnet, daß eine elastische Längslamelle aus Kunststoff mit einem Wulst des Riegelzugelements zusammenwirkt, wenn der Riegel sich in entriegeltem Zustand befindet.

Diese Lamelle ist fest mit dem Schaltergehäuse verbunden und besteht vorzugsweise aus einem einzigen Stück.

Ein besseres Verständnis der Erfindung ergibt sich beim Lesen der nachfolgenden Beschreibung, worin auf die beigefügte Zeichnung Bezug genommen wird, in der:

- die Figur 1 einen Längsschnitt durch eine Diebstahlsicherung gemäß einem Ausführungsbeispiel der Erfindung mit ausgefahrenem Riegel darstellt; und
- die Figur 2 der Figur 1 entspricht, wobei jedoch der Riegel zurückgezogen ist.

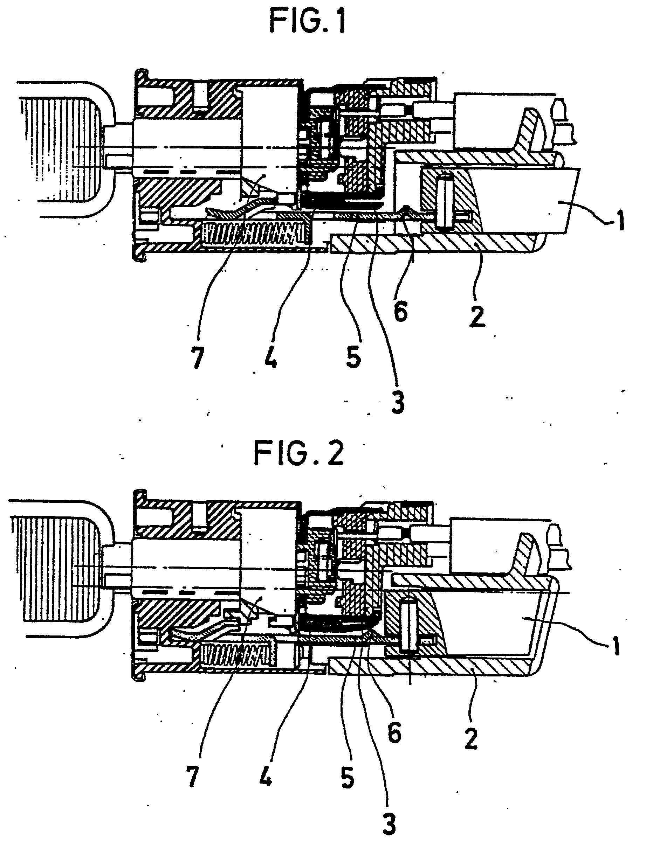

Die Diebstahlsicherung enthält einen Riegel 1, der sich mit einem Spiel in der Riegelführung 2 bewegt und durch Translationsbewegung fest mit einem Riegelzugelement 5 verbunden ist. Je nach Winkelstellung eines Nockendrehelements 7 wird der Riegel 1 in Verriegelungsstellung ausgefahren (Figur 1) oder in Entriegelungsstellung zurückgezogen (Figur 2).

In dieser Entriegelungsstellung, die das Fahren des Fahrzeugs ermöglicht, bewirkt das Aneinanderstoßen des Riegels 1 und der Riegelführung 2 ein unangenehmes Geräusch.

Um dieses Geräusch zu beseitigen, sieht die Erfindung vor, das elektrische Schaltergehäuse 4 der Diebstahlsicherung mit einer Kunststofflamelle 3 zu versehen. Die Lamelle 3 kann aufgesteckt sein oder aus einem einzigen Stück bestehen. Außerdem ist am Riegelzugelement 5 ein Wulst 6 ausgebildet, der die Lamelle 3 des Schalters 4 in der Endlage verformt. Der so bewirkte Druck wird über das Zugelement 5 auf den Riegel 1 übertragen und der Riegel 1 verhindert das weitere Aneinanderstoßen, da er gezwungen wird, mit den Unterseiten und/oder Oberseiten der Riegelführung 2 in festen Kontakt zu kommen.

## Patentansprüche

1.- Lenkschloß-Diebstahlsicherung mit einem Riegel (1), der sich in einer Riegelführung (2) bewegt und mit einem Riegelzugelement (5) verbunden ist, dadurch gekennzeichnet, daß eine elastische Längslamelle aus Kunststoff (3) mit einem Wulst (6) des Riegelzugelements (5) zusammenwirkt, wenn sich der Riegel (1) in entriegeltem Zustand befindet.

2.- Diebstahlsicherung gemäß Anspruch 1, dadurch gekennzeichnet, daß die genannte Lamelle (3) fest mit dem Schaltergehäuse (4) verbunden ist und vorzugsweise aus einem einzigen Stück besteht.

## Claims

1. An anti-theft steering lock comprising a locking bar (1) which is movable in a locking bar guide (2) and is connected to a locking bar pulling element (5), characterized in that an elastic longitudinal thin plate made of plastic (3) cooperates with a thickening (6) on the pulling element (5) when the locking bar (1) is in the unlocked position.

2. An anti-theft device according to Claim 1, characterized in that the said thin plate (3) is fixed to the switch cover (4) and preferably they form a single piece.

## Revendications

1. Antivol de direction comprenant un pêne de verrouillage (1) coulissant dans un guide-pêne (2) et relié à une tirette de pêne (5), caractérisé par le fait qu'une lamelle longitudinale élastique en matière plastique (3) coopère avec un bossage (6) de a tirette de pêne (5) lorsque le pêne (1) se trouve en position de déverrouillage.

2. Antivol selon la revendication 1, caractérisé par le fait que ladite lamelle (3) est solidarisée avec le boîtier d'interrupteur (4) et est de préférence en une seule pièce.

# FIG.1

# FIG.2